# EUROPÄISCHE PATENTSCHRIFT

(11) **EP 3 587 227 B1**
(45) Veröffentlichungstag und Bekanntmachung des Hinweises auf die Patenterteilung: **02.03.2022**
(21) Anmeldenummer: 19181908.5
(22) Anmeldetag: 24.06.2019
(51) Int. Cl.: B62H 5/14

(54) **RAHMENSCHLOSS**
FRAME LOCK
ANTIVOL DE CADRE

(30) Priorität: 29.06.2018 DE 102018115889; 23.10.2018 DE 102018126356
(43) Veröffentlichungstag der Anmeldung: 01.01.2020
(73) Patentinhaber: haveltec GmbH, 14776 Brandenburg an der Havel (DE)
(72) Erfinder: Anuth, Christian, 14778 Brandenburg an der Havel (DE); Weintraut, Markus, 14776 Brandenburg an der Havel (DE)
(74) Vertreter: Weisse, Renate

(56) Entgegenhaltungen:
- EP-A1- 2 810 857
- WO-A1-2009/145332
- DE-A1-102013 002 196
- JP-A- 2000 095 165
- US-A1- 2017 043 828

## Beschreibung

### Technisches Gebiet

Die Erfindung betrifft ein Rahmenschloss mit Mitteln zur Befestigung am Rahmen eines Fahrrads oder eines anderen von einer Person angetriebenen Fahrzeugs, wobei das Rahmenschloss von einem geöffneten in einen verriegelten Zustand zuschließbar ist, bei welchem sich ein Bügel oder eine andere Blockiervorrichtung des befestigten Rahmenschlosses in dem Bereich zwischen den Speichen eines Fahrzeugrads befindet. Die Erfindung betrifft ferner einen Schließbügel für ein Rahmenschloss, wobei die Mittel zur Befestigung des Rahmenschlosses am Rahmen des Fahrzeugs ein bewegliches Lager umfassen, welches eine Ausweichbewegung des Rahmenschlosses erlaubt, wenn die Blockiervorrichtung während des Schließvorgangs auf eine Speiche trifft.

Ein solches Rahmenschloss bildet eine Wegfahrsperre, mit welcher der Fahrbetrieb blockiert wird. Fahrräder und andere Fahrzeuge, die von Personen angetrieben werden, werden zunehmend im urbanen Bereich für alltägliche Besorgungen eingesetzt. Ein Problem ist nach wie vor der Schutz des Fahrzeugs vor Diebstahl. Neben Kabel-, Bügel- oder Faltschlössern haben sich fest am Fahrradrahmen montierte Rahmenschlösser bewährt.

Unter Fahrrädern werden einspurige Fahrzeuge verstanden, welche durch Muskelkraft oder mit einem Antrieb fortbewegt werden können. Dazu zählen ebenso Räder mit einem Stütz- bzw. Zusatzrad. Solche Fahrzeuge sind z. B. Lastenräder, E-Bikes, Pedelecs, S-Pedelecs, Dreiräder, Laufräder, Tretroller, Fahrräder und dergleichen. Ausgenommen sind Kraftfahrzeuge, wie z. B. Personenkraftwagen und Lastkraftwagen.

### Stand der Technik

Rahmenschlösser für Fahrräder sind bekannt. Mechanische Rahmenschlösser blockieren durch einen Schließbügel die Drehbewegung eines der Räder. Dadurch wird das unbefugte Benutzen des Fahrzeugs erschwert bzw. verhindert. Typische Rahmenschlösser werden am Fahrradrahmen im Bereich des Hinterrades befestigt. Zum Abschließen wird ein gekrümmter Bügel mechanisch durch einen Zwischenraum zwischen den Speichen hindurch bewegt und am anderen Ende gesichert. Es gibt ferner Rahmenschlösser, bei denen ein gerader Riegel von der Seite zwischen die Speichen bewegt und in dieser Lage gesichert wird. Wenn das Rad sich in einer Position befindet, bei welcher der Bügel oder Riegel auf eine Speiche trifft, muss das Fahrrad bewegt werden und das Rad in eine andere Position gebracht werden, bis der Bügel oder Riegel zwischen die Speichen passt. Dies ist mit Mühe verbunden und es besteht die Gefahr, dass Hände oder Kleidung verschmutzen.

Neben den oben beschriebenen, mechanisch betätigten Rahmenschlössern gibt es auch automatische oder halbautomatische Schlösser. Bereits bekannt sind Rahmenschlösser, welche über einen motorisch angetriebenen Schließbügel verfügen. So wird zum Beispiel in der EP 2357124 A2 eine elektromechanisch angetriebene Wegfahrsperre dargestellt. Ein halbautomatisches Schloss ist beispielsweise auch aus der DE 10 2016 125 320 A1 (Trelock) bekannt. Bei dem dort offenbarten Rahmenschloss ist ein Motor vorgesehen, mit welchem der Bügel bewegt wird. Zur Betätigung derartiger halbautomatischer Schlösser bleibt der Nutzer in der Nähe. Trifft der Bügel oder Riegel auf eine Speiche, so kann der Nutzer - ähnlich wie bei mechanischen Schlössern - das Rad bewegen, so dass der Bügel oder Riegel in den Zwischenraum zwischen den Speichen passt.

Wie bei den von Hand betätigten Rahmenschlössern ist es bei halbautomatischen Rahmenschlössern erforderlich den Mechanismus manuell zu verriegeln oder zu entriegeln. Auch elektronisch gesteuerte Rahmenschlösser müssen mit einem elektronischen Schlüssel entriegelt werden. Ein solcher elektronischer Schlüssel kann eine Fernbedienung oder ein Mobiltelefon sein. Dabei ist es umständlich und zeitraubend gerade für kurze Besorgungen das Rad mittels verschiedener Bedienschritte zu sichern und zu entsichern.

WO 2016/173 804 A1 offenbart ein vollautomatisches Schloss. Das dort offenbarte Rahmenschloss wird mittels eines mobilen Endgerätes, etwa eines Smartphones oder Handsenders betätigt. Wenn der Nutzer sich dem Schloss nähert, öffnet das Schloss. Wenn der Nutzer sich von dem Schloss entfernt, schließt das Schloss. Öffnen und Schließen erfolgen in besonders komfortabler Weise ohne jedes manuelle Zutun des Nutzers. Anders als bei halbautomatischen Schlössern, muss das Öffnen und Schließen auch nicht an einem Endgerät ausgelöst werden.

Die gattungsgemässen JP 2000 095 165 A und WO2009/145 332 A1 offenbaren ein Bügelschloss mit einem beweglichen Bügel.

### Offenbarung der Erfindung

Es ist Aufgabe der Erfindung, das Verriegeln eines Rahmenschlosses sicherzustellen und zu erleichtern, auch wenn die Gefahr besteht, dass eine Speiche das wirksame Blockieren mit einer Blockiervorrichtung verhindert.

Bei der Erfindung ist vorgesehen, dass die Blockiervorrichtung von einem Bügel gebildet ist, der eine Verzahnung aufweist, in welchen ein von dem Motor angetriebenes Zahnrad eingreift, wobei der Schließbügel als Metallbügel ausgeführt ist, auf welchen eine Kunststoffverzahnung aufgespritzt, aufgeschrumpft oder auf andere Weise aufgebracht ist. Die Herstellung eines Metallbügels mit einer Verzahnung ist teuer. Umgekehrt muss der Bügel möglichst stabil sein um beispielsweise ein Aufbrechen des Schlosses zu verhindern und eine hohe Sicherheit gegen Diebstahl zu gewähren. Hierfür ist Kunststoff nicht gut geeignet. Die Verwendung eines Schließbügels aus Metall, auf den eine Verzahnung aus Kunststoff aufgebracht ist, ermöglicht es beide Anforderungen zu erfüllen: Stabilität und kostengünstige Verzahnung. Die Verzahnung muss lediglich eine Bewegung des Schließbügels ermöglichen. Hier wirken vergleichsweise geringe Kräfte, die gut über eine kostengünstig herstellbare Verzahnung aus Kunststoff übertragen werden können. Die für das Schloss wichtige Stabilität wird über einen Metallkern hergestellt.

Erfindungsgemäß ist ferner vorgesehen, dass die Mittel zur Befestigung des Rahmenschlosses am Rahmen des Fahrzeugs ein bewegliches Lager umfassen, welches eine Ausweichbewegung des Rahmenschlosses erlaubt, wenn die Blockiervorrichtung während des Schließvorgangs auf eine Speiche trifft.

Dann muss das Fahrrad nicht mehr bewegt werden, um sicherzustellen, dass der Bügel oder Riegel oder eine andere Blockiervorrichtung nicht auf eine Speiche trifft. Wenn eine Speiche im direkten Weg der Blockiervorrichtung liegt, trifft die Blockiervorrichtung auf die Speiche. Dabei wird eine Kraft ausgeübt. Durch diese Kraft macht das bewegliche gelagerte Rahmenschloss eine kleine Ausweichbewegung. Diese Ausweichbewegung ermöglicht es, dass die Blockiervorrichtung die Speiche passieren kann. Die Ausweichbewegung braucht aufgrund der typischerweise geringen Speichendurchmesser nur sehr gering sein. Sie reicht aber aus um sicherzustellen, dass das Schloss schließt, ohne das Rad bewegen zu müssen.

Besonders vorteilhaft ist die bewegliche Lagerung des Rahmenschlosses, weil die Kraft, die erforderlich ist um der Speiche durch Bewegung des Rahmenschlosses auszuweichen erheblich geringer ist, als die Kraft, die aufgewendet werden muss, um der Speiche durch Bewegung des ganzen Fahrrads auszuweichen.

Die Erfindung kann daher besonders vorteilhaft bei halbautomatischen und automatischen Rahmenschlössern verwirklicht werden, bei denen eine Steuereinheit und ein von der Steuereinheit gesteuerter Antrieb zum Zuschließen des Rahmenschlosses vorgesehen ist. Die vergleichsweise geringe Kraft für die Ausweichbewegung wird von dem Antrieb, beispielsweise einem Elektromotor, aufgewendet. Dieser kann entsprechend mit einer geringen Leistung arbeiten.

Die erfindungsgemäße Anordnung ist besonders bei automatischen Rahmenschlössern vorteilhaft, bei denen vorgesehen ist, dass
(a) die Steuereinheit einen Empfänger für drahtlos übertragene Signale eines zugehörigen, mobilen Senders aufweist, und
(b) die Steuereinheit nach Maßgabe der von dem mobilen Sender empfangenen Signale oder Signalstärken das Rahmenschloss zuschließt.

Dann erfolgt der Schließvorgang automatisch und/oder ferngesteuert. Insbesondere bei einem vollautomatischen Rahmenschloss kann sich der Nutzer vom Fahrrad entfernen ohne kontrollieren zu müssen, ob der Schließvorgang erfolgreich war oder ob er durch eine Speiche verhindert wurde. Die erfindungsgemäße, bewegliche Lagerung des Rahmenschlosses stellt sicher, dass das Rahmenschloss auch dann verriegelt ist, wenn eine Speiche im Weg ist. Eine zusätzliche Kontrolle ist nicht erforderlich.

Während der Nutzer bei halbautomatischen und mechanischen Schlössern zumindest noch in der Nähe ist, weil er den Schließvorgang selber entweder am Schloss oder an einem Endgerät auslöst, ist dies bei vollautomatischen Schlössern nicht mehr immer der Fall. Der Nutzer merkt also ggf. gar nicht, dass das Schloss wegen einer blockierenden Speiche nicht verriegelt wird.

Eine Speiche hat üblicherweise einen runden Querschnitt. Dadurch wird das Ausweichen der Blockiervorrichtung möglich. Bei einer weiteren Ausgestaltung der Erfindung ist darüber hinaus vorgesehen, dass die Blockiervorrichtung am Speichen-seitigen Ende angeschrägt, abgerundet, zugespitzt oder auf andere Weise zum Ende hin verjüngt ist. Eine sich verjüngende Blockiervorrichtung erleichtert die Ausweichbewegung zusätzlich. Durch die Gestaltung der Blockiervorrichtung am Speichen-seitigen Ende kann bereits werksseitig voreingestellt werden, ob eine Ausweichbewegung mit einem unsymmetrischen Ende nur in einer Richtung möglich sein soll oder mit einem symmetrischen Ende in beiden Richtungen. Dies ist bei einem abgerundeten oder symmetrisch zugespitzten Ende der Fall.

Die Wahl der Bügelspitzenform wird vorrangig durch die Herstellbarkeit und die Kosten der Herstellung bestimmt. Der Anspitzwinkel des Bügels wird so gewählt, dass sich eine optimale Kraftumlenkung ergibt um einerseits die geringen Kräfte des Motors voll auszunutzen und um andererseits den Stromverbrauch sowie die Reibung an der Speiche relativ gering zu halten.

Das Rahmenschloss kann über eine Metall-Ersatz-Feder, d.h. über ein gebogenes Metallstück am Rahmen befestigt werden. Es kann aber auch über ein im SpritzgussVerfahren hergestelltes Bauteil aus einer Hart-Weich-Kombination und einem Gewindeeinsatz befestigt werden. Eine weitere Variante ist ein geschlitztes Bauteil, ähnlich wie eine Schlitzkupplung mit Gewindegängen, welches eine Verkippung des Rahmenschlosses erlaubt. Auch Gelenke mit oder ohne Beaufschlagung einer Rückstellkraft durch eine Feder o.ä. können zur beweglichen Lagerung des Rahmenschlosses am Rahmen verwendet werden. Schließlich ist es auch möglich, ein Scharnier mit einer Druck- und/oder Zugfeder einzusetzen.

Eine besonders kostengünstige und einfache, und daher bevorzugte Variante der beweglichen Lagerung sieht vor, dass das Lager Gummi oder ein anderes elastisches Material umfasst, über welches die Verbindung zwischen Rahmen und Rahmenschloss hergestellt wird. Ein solches Lager kann mit einem Bauteil verwirklicht werden, dass unter dem Namen "Silentblock" bekannt ist. Ein Metallgewinde wird fest mit einem Block aus einem elastischen Material verbunden. Der Block ist auf beiden Seiten mit einem Metallgewinde verbunden. Auf der einen Seite dient das Gewinde zur Befestigung am Rahmen des Fahrzeugs. Auf der anderen Seite dient das Gewinde zur Befestigung des Rahmenschlosses. Statt eines Gewindes kann selbstverständlich auch eine andere Befestigungsmöglichkeit, etwa eine Klips- oder Rastverbindung vorgesehen sein. Auch kann der Silentblock in das Rahmenschloss integriert sein, so dass nur eine Befestigungsmöglichkeit zur Befestigung am Rahmen vorgesehen sein muss.

Bei einer bevorzugten Ausgestaltung der Erfindung ist vorgesehen, dass das Lager nur in einem begrenzten Winkelbereich beweglich ist. Eine solche Begrenzung kann durch Auswahl des Materials für das Lager erreicht werden. Es ist aber auch möglich, einen Anschlag oder dergleichen vorzusehen. Mit einer Begrenzung wird verhindert, dass das Rahmenschloss bei der Fahrt über Hindernisse oder anderweitigen Bewegen des Fahrrads gegen den Rahmen stößt und Geräusche erzeugt oder beschädigt wird.

Gummi-Metall-Lager sind in der Regel bei Einsatz im Außenbereich, neben der mechanischen Belastung, verschiedenen Umwelteinflüssen wie Sonnenlicht und Feuchtigkeit ausgesetzt. Dies hat eine begrenzte Lebensdauer zur Folge. Bei einer vorteilhaften Ausgestaltung der Erfindung ist daher vorgesehen, dass das Gummi-Metall-Lager mit einer schützenden Ummantelung versehen ist. Zusätzlich wird eine Sicherheitsabfangvorrichtung bei der Montage angebracht, welche im Fall des alterungsbedingten Versagens des Gummi-Metall-Lagers ein gänzliches Lösen des Rahmenschlosses vom Fahrradrahmen zuverlässig verhindern kann.

Ausgestaltungen der Erfindung sind Gegenstand der Unteransprüche. Ausführungsbeispiele sind nachstehend unter Bezugnahme auf die beigefügten Zeichnungen näher erläutert.

### Kurze Beschreibung der Zeichnungen

- Fig. 1: ist eine perspektivische Ansicht eines vollautomatischen Rahmenschlosses aus einer ersten Perspektive.
- Fig. 2: ist eine perspektivische Ansicht eines vollautomatischen Rahmenschlosses aus einer zweiten Perspektive.
- Fig. 3: illustriert, wie das geöffnete Rahmenschloss aus Figur 1 an einem Fahrrad installiert wird.
- Fig. 4: zeigt das installierte Rahmenschloss im verriegelten Zustand.
- Fig. 5: ist eine Seitenansicht des installierten Rahmenschlosses, welches oben in Richtung Rahmen gekippt ist.
- Fig. 6: ist eine Seitenansicht des installierten Rahmenschlosses, welches sich in seiner Ausgangslage befindet.
- Fig. 7: ist eine Seitenansicht des installierten Rahmenschlosses, welches oben vom Rahmen weggekippt ist.
- Fig. 8: illustriert, wie das Rahmenschloss einer Speiche durch eine translatorische Bewegung ausweicht.
- Fig. 9: illustriert, wie das Rahmenschloss einer Speiche durch eine Drehbewegung ausweicht.
- Fig. 10: illustriert, wie das Rahmenschloss einer Speiche durch eine translatorische und eine Drehbewegung ausweicht.
- Fig. 11: ist ein Querschnitt durch einen Silentblock, d.h. eine Gummi-Metall-Verbindung mit einem Innengewinde und einem gegenüberliegenden Außengewinde.
- Fig.12: ist eine perspektivische Darstellung eines alternativen Silentblocks.
- Fig.13: zeigt ein alternatives Lager in Form einer Metall-Ersatz-Feder.
- Fig.14: zeigt ein alternatives Lager in Form eines im Spritzgussverfahren hergestellten Bauteils aus einer Hart-Weich-Kombination.
- Fig.15: zeigt ein alternatives Lager in Form eines mehrfach geschlitzten Bauteils.
- Fig. 16: zeigt ein alternatives Lager in Form eines Gelenks mit einer konischen Doppelfeder.
- Fig. 17: zeigt ein alternatives Lager in Form eines Scharniers mit einer Druck-/Zugfeder.
- Fig.18: ist eine perspektivische Ansicht eines Schließbügels mit einem Metallkern und einer aufgespritzten Kunststoffverzahnung, sowie verschiedener Ausführungsformen der Bügelspitze.
- Fig.19: illustriert, wie der Schließbügel aus Figur 18 in dem Rahmenschloss positioniert ist.
- Fig. 20: zeigt eine Explosionsdarstellung der Komponenten eines automatischen Rahmenschlosses
- Fig. 21: zeigt ein Gummi-Metall-Lager (ähnl. Silentblock) mit einer Schutzhülle und einer Sicherheitsabfangvorrichtung

### Beschreibung der Ausführungsbeispiele

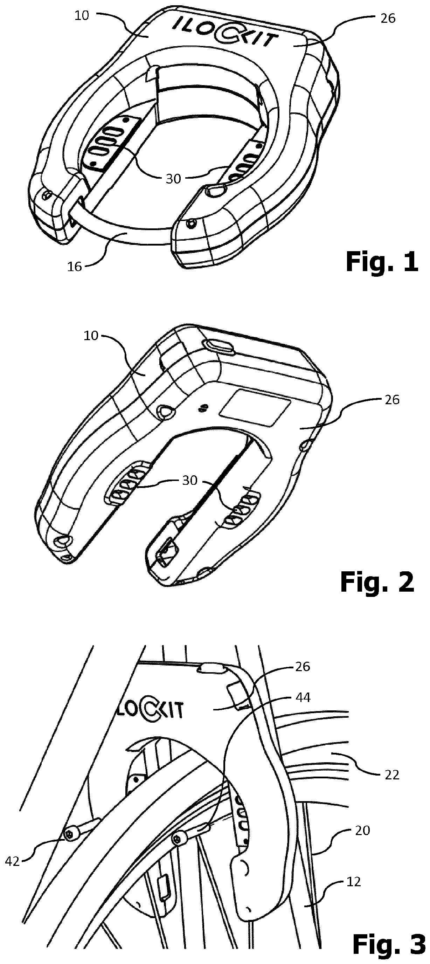

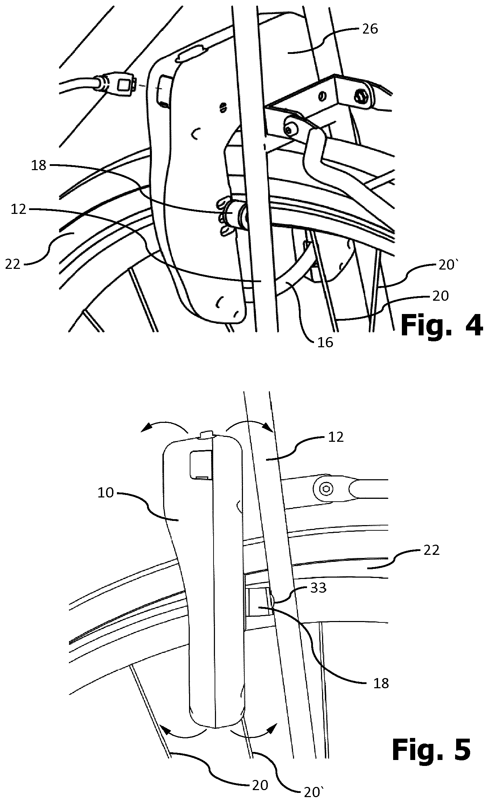

Figur 1 und 2 zeigen ein Rahmenschloss 10 für Fahrräder oder andere Zweiräder. Das Rahmenschloss 10 ist, wie in Figur 3 und 4 dargestellt, am Rahmen eines Fahrrads befestigt. Im vorliegenden Fall ist das Rahmenschloss 10 an einer Sattelrohrstrebe 12 befestigt. Es ist aber auch möglich, das Rahmenschloss 10 ggf. unter Verwendung eines geeigneten Adapters an einer anderen Stelle des Rahmens zu befestigen. Die Befestigung erfolgt mittels eines nachstehend näher erläuterten Lagers 18.

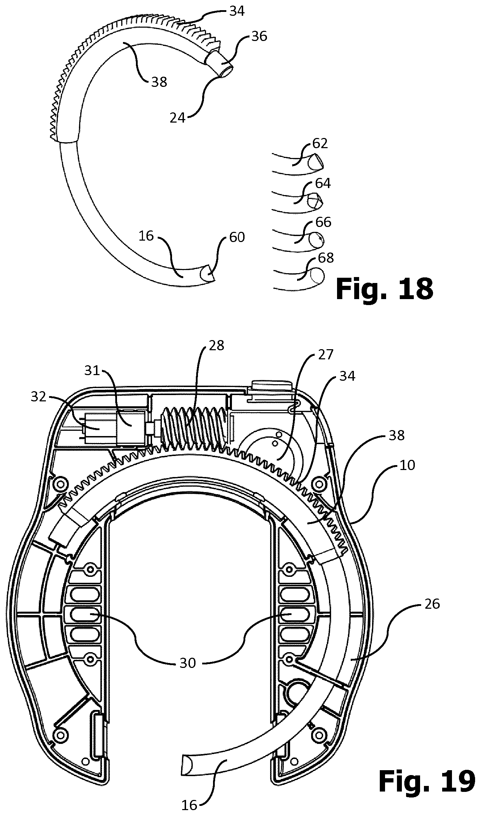

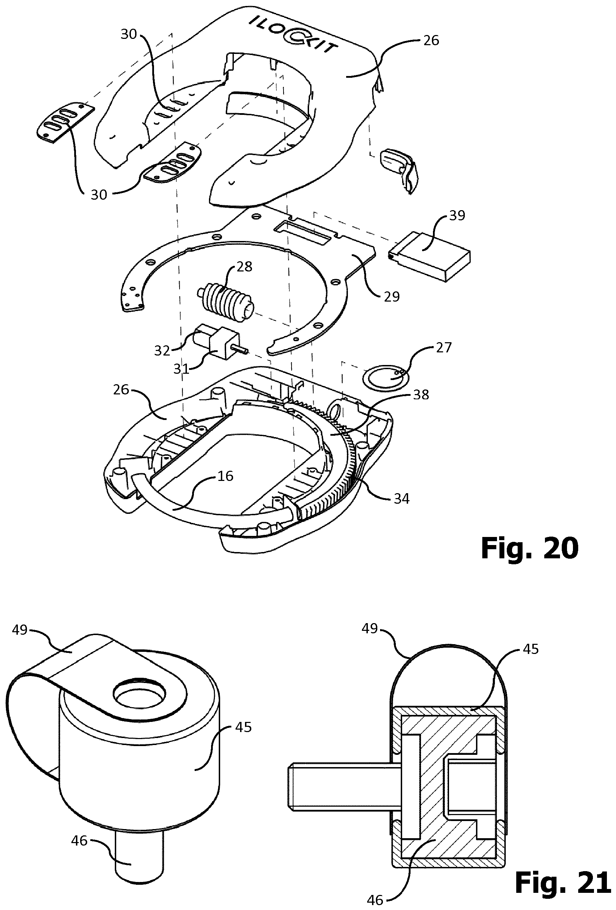

Ein an dem Rahmenschloss 10 vorgesehener Schließbügel 16 wird zum Verriegeln zwischen die Speichen 20 eines Rades 22 bewegt und blockiert dann die Rotation des Rads 22. Der Schließbügel ist in Figur 18 noch einmal gesondert dargestellt. Der Schließbügel 16 ist allseitig mit einer Rundung 24 versehen, um die Führung innerhalb des Rahmenschlosses 10 zu verbessern. Ein zweiteiliges Gehäuse 26 nimmt die mechanischen und elektronischen Komponenten auf. Dies ist in Figur 19 und Fig. 20 schematisch dargestellt.

Montageaufnahmen 33 auf beiden Seiten des Rades ermöglichen den Anbau an den Rahmen 12. Eine Vielzahl von Fahrrädern ist bereits mit Gewindebohrungen zur Aufnahme von Rahmenschlössern ausgestattet. Im vorliegenden Ausführungsbeispiel ermöglichen mehrere Montageaufnahmen 30 in Form von Langlöchern am Rahmenschloss, die Anpassung an unterschiedlich positionierte Gewindebohrungen im Rahmen.

Der Schließbügels 16 ist innerhalb des Gehäuses geführt. Hierzu finden Zahnräder, Führungsrippen, Führungsrollen und/oder Abstandsbolzen (nicht dargestellt) Verwendung. Dies ermöglicht die reibungsarme Lagerung des Schließbügels 16. Der Schließbügel wird mit einem Elektromotor 32 angetrieben. Hierzu ist ein Getriebe 31 mit einer Schnecke 28 vorgesehen. Eine Verzahnung 34 am Umfang des Schließbügels 16 ermöglicht die Übertragung der Antriebskräfte des Antriebsmotors 32 und die Umwandlung in eine Rotationsbewegung des Schließbügels 16. Jeweils ein Stift bildet in der Öffnungs- und ein Stift in der Verriegelungsstellung den Endanschlag durch Sperrung gegen einen Abstandsbolzen. Alternativ wird die Endstellung durch elektrische Endlagenkontakte erkannt. Dabei wird der Schließbügel durch einen Schleifkontakt auf Massepotential gebracht. Dieses Potential wird durch Fahren in eine der Endlagen und durch Schließen des Stromkreises als Signal an die Steuerung weiter gegeben. Es kann weiterhin vorgesehen sein, dass die Endlagen induktiv durch Hall-geber auf der Platine und durch im Schließbügel eingesetzte Permanentmagneten erkannt werden. Eine solche Anordnung ist verschleißfrei und nicht mehr anfällig für Kontaktkorrosion.

Figur 18 zeigt den Schließbügel 16 noch einmal gesondert. Der Schließbügel 16 besteht aus einem Metallkern 36. Dieser wird durch einfaches Biegen eines Metallstabes hergestellt. Der kreisförmig gekrümmte Metallkern 36 wird im Spritzgussverfahren mit einer Ummantelung 38 mit einer Außenverzahnung 34 versehen. Die Ummantelung 38 erstreckt sich nur über etwa die Hälfte des Metallkerns 36 und deckt den Winkelbereich ab, in dem die daran vorgesehene Verzahnung 34 in die Schnecke 28 greift. Beim Erkalten des Kunststoffs nach dem Spritzguss-Aufbringen schrumpft die Ummantelung 38 gut auf den Metallkern 36 auf und ermöglicht so eine gute Kraftübertragung auf den Schließbügel 36. Anders als der Schließbügel selber muss die Verzahnung nur geringe Kräfte zum Bewegen in die Verriegelungsstellung aufnehmen und kann daher aus Kunststoff gefertigt sein. Dieses Verfahren ermöglicht die kostengünstige Herstellung eines teilverzahnten und gleichzeitig stabilen Schließbügels.

Figur 2 und Figur 3 zeigen den Schließbügel 16 in geöffneter Stellung. Dann ist das Rad nicht blockiert. Figur 1 und 4 zeigen die gleichen Komponenten wie Figur 2 und 3 in der Verriegelungsstellung.

Im Endzustand wird mit einer Sperrvorrichtung der Schließbügels 16 in seiner Position gesichert. Alternativ wird der Schließbügel durch die Selbsthemmung des Schneckengetriebes in der jeweiligen Stellung gehalten. Dabei wird unter dem Begriff "Sperren" der Zustand verstanden, bei dem es darum geht den Schließbügel in seiner Position zu sichern. Beim Verriegeln steht die Blockierung des Rades durch den Schließbügel im Vordergrund

Figur 19 zeigt das Gehäuse 26, welches einen Energieträger, etwa einen Akkumulator 39 oder eine Batterie und den Motor 32, sowie das Getriebe 31 aufnimmt. Der Schließbügel 16 ist derart positioniert und geführt, dass die Schnecke 28 in die Verzahnung 34 eingreift und die Antriebskräfte übertragen kann. Der Verbund von Gehäuse 26 und Führungselementen führt den Schließbügel 16, während der Bewegung in die Öffnungs- oder Verriegelungsstellung.

Das vorliegende Rahmenschloss ist als vollautomatisches Rahmenschloss ausgebildet. Eine Steuerung steuert den Verriegelungs- bzw. Öffnungsvorgang des Rahmenschlosses 10. Neben dem Rahmenschloss 10 ist eine portable Funkeinheit, eine Detektionseinheit für die Radrotation und ein Boardnetz vorgesehen. Diese Komponenten der Steuerungselektronik befinden sich, wie in Figur 20 dargestellt innerhalb des Gehäuses 16 auf einer Leiterplatine 29. Eine zentrale Steuereinheit dient zur Aufnahme, Verarbeitung und Ausgabe von elektrischen Signalen der Komponenten. Eine fest in das Rahmenschloss 10 integrierte bidirektionale Bluetooth-Funkeinheit ist mittels einer Bluetooth Funkverbindung mit einer portablen bidirektionalen Bluetooth-Funkeinheit verbunden. Die portable, bidirektionale Bluetooth-Funkeinheit kann in Form eines Smartphones, Tablets oder eines Transponders ausgeführt sein. In Abhängigkeit vom Abstand der portablen Funkeinheit zum Rahmenschloss setzt die zentrale Steuereinheit den Antriebsmotor 32 in Betrieb. Ist der Abstand der portablen Funkeinheit zum Rahmenschloss 10 größer als beispielsweise 2 Meter wird eine Verriegelung ausgeführt. Ist der Abstand der portablen Funkeinheit zum Rahmenschloss 10 kleiner als beispielsweise 2 Meter wird eine Öffnung ausgeführt. Dabei kann der Nutzer die Abstände (Schwellwerte) für ein Verriegelungs- bzw. Öffnungsvorgang individuell konfigurieren. Eine Hysterese zwischen den Schwellwerten verhindert den ständigen Wechsel von Verriegelungs- und Öffnungsvorgängen bei Schwankungen der Messwerte.

Ein Signalgeber 27 erzeugt ein akustisches Alarmsignal zur Abschreckung bei einem Diebstahlversuch und gibt akustische Meldungen über den Zustand des Schlosses aus. Derartige Zustände sind z.B. "niedriger Ladezustand des Akkumulators", "Verriegelungsvorgang konnte nicht abgeschlossen werden", "erfolgreiche Authentifizierung des Nutzers", etc.

Ein Neigungs- und Beschleunigungsgeber erkennt Bewegungen des Fahrrads und übermittelt diese Informationen an die zentrale Steuereinheit. Ein Algorithmus wertet die Signale aus und steuert den Signalgeber bei einem erkannten Diebstahlversuch an bzw. übermittelt eine Nachricht an die portable Funkeinheit des Besitzers.

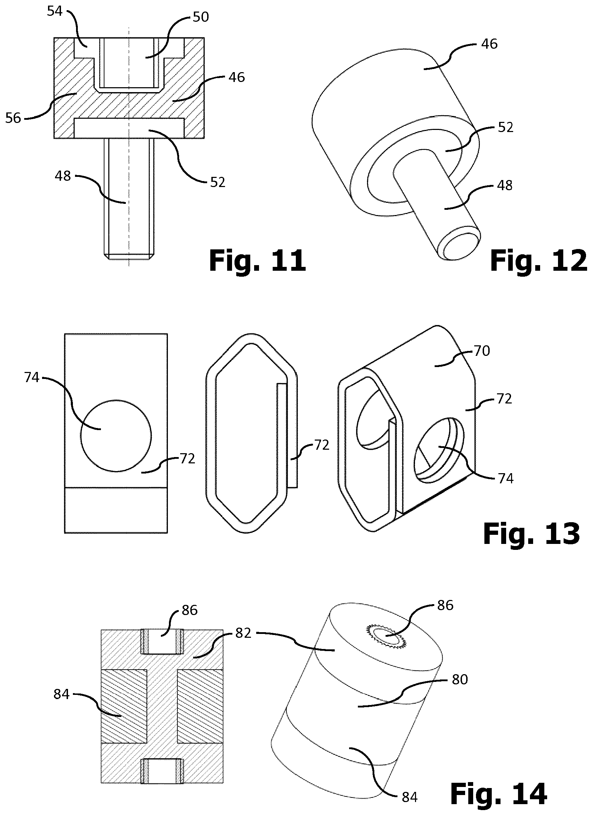

In den Figuren 3 und 4 ist illustriert, wie das zuvor beschriebene Rahmenschloss 10 an einem Fahrrad montiert wird. Die vielfach an Fahrradrahmen integrierten Gewindebuchsen zur Aufnahme von Zubehör werden als Befestigungspunkte 33 für das Rahmenschloss 10 genutzt. Das Rahmenschloss 10 wird mittels zweier Schrauben 42 und 44 befestigt, die beidseitig durch jeweils eine der Montageaufnahmen 30 gesteckt werden. Dies ist in Figur 3 illustriert. Die Schrauben 42 und 44 werden jedoch nicht direkt in die Befestigungspunkten der Sattelrohrstreben 12 des Fahrradrahmens eingeschraubt. Zwischen der Sattelrohrstrebe 12 und dem Rahmenschloss 10 ist auf beiden Seiten des Rades ein Lager 18 vorgesehen. Dies ist in den Seitenansichten der Figuren 5 bis 8 und 10 zu erkennen. Im vorliegenden Ausführungsbeispiel ist das Lager 18 von einem sogenannten Silentblock 46 gebildet. Diese sind kommerziell erhältlich und ihre Herstellung brauch daher hier nicht näher beschrieben werden. Ein Beispiel für einen solchen Silentblock 46 ist in den Figuren 11 und 12 dargestellt. Ein Silentblock 46 ist ein Gummi-Metall-Puffer, bei dem eine Metallplatte mit einem Elastomer verbunden wird. Ein Beispiel für ein geeignetes Elastomer ist EPDM. An die Metallplatte kann dann ein Gewindestift angeformt sein und/oder eine in das Elastomer versenkte Gewindeöffnung. In Figur 11 und Figur 12 ist ein Silentblock 46 gezeigt, der einen Gewindestift 48 an einer Metallplatte 52 und eine damit fluchtende Gewindeöffnung 50 an einer Metallplatte 54 aufweist. Dies ist in Figur 11 gut zu erkennen. Zwischen den beiden Metallplatten 52 und 54 ist ein Elastomer 56 angeordnet. Im Übrigen sind die Metallplatten 52 und 54 nicht verbunden.

Die Metallplatten 52 und 54 mit dem Gewindestift 48 bzw. der Gewindeöffnung 50 sind im Rahmen der Materialeigenschaften des Elastomers 56 gegeneinander beweglich. Neben einer geringfügigen translatorischen Bewegung, bei welcher das gesamte Material zusammengepresst oder auseinander gezogen wird, ist insbesondere eine Rotationsbewegung möglich, welche eine Verkippung der Metallplatten 52 und 54 gegeneinander ermöglicht. Es ist ferner eine Winkelbewegung oder Rotationsbewegung lotrecht zur Symmetrieachse vorgesehen. Dann wird das Material 56 auf einer Seite etwas zusammengepresst und auf der anderen Seite etwas auseinandergezogen.

Figuren 5 bis 7 illustrieren, welchen Effekt die Verwendung eines solchen Lagers hat.

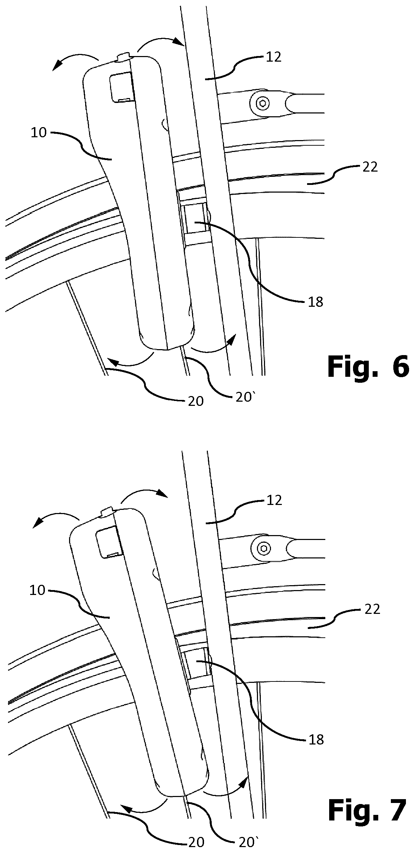

In Figur 6 wirkt keine Kraft auf das Rahmenschloss 10. Das Rahmenschloss 10 befindet sich in einer Stellung, bei welcher der Schließbügel 16 gerade durch den Zwischenraum zwischen zwei Speichen 20 und 20' geführt ist. Wenn sich nun eine Speiche 20' im Bewegungsbereich des Schließbügels 16 befindet, trifft der Schließbügel 16 beim Verriegeln auf die Speiche. Dabei wird eine Kraft auf die Speiche ausgeübt. Die Gegenkraft wird vom Schließbügel in das Rahmenschloss 10 eingeleitet. Dieses kann nun aufgrund der beweglichen Lagerung eine Kippbewegung ausführen. Die Kippbewegung kann im vorliegenden Ausführungsbeispiel in beiden Richtungen um eine horizontale Achse erfolgen: Figur 5 zeigt eine Kippbewegung im Uhrzeigersinn und Figur 7 eine Kippbewegung entgegen dem Uhrzeigersinn.

Das Material des Elastomers 56 ist dabei so gewählt, dass die Kippbewegung nur bei einer ausreichend großen Kraft erfolgt und nicht etwa bereits, wenn das Fahrrad über eine Unebenheit fährt. Dadurch wird verhindert, dass das Rahmenschloss zu locker sitzt und sich während der Fahrt in unerwünschter Weise bewegt. Umgekehrt ist das Material des Elastomers 56 auch so ausgewählt, dass die für eine Ausweichbewegung des Rahmenschlosses erforderliche Kraft hinreichend gering ist. Dadurch kann das Rahmenschloss mit einem Motor vergleichsweise geringer Leistung betrieben werden. Die Übersetzung des Getriebes wird dabei so gewählt, dass eine große Kraft ausgeübt werden kann, selbst wenn der Schließbügel dabei etwas langsamer verriegelt, als dies bei herkömmlichen automatischen oder halbautomatischen Schlössern der Fall ist.

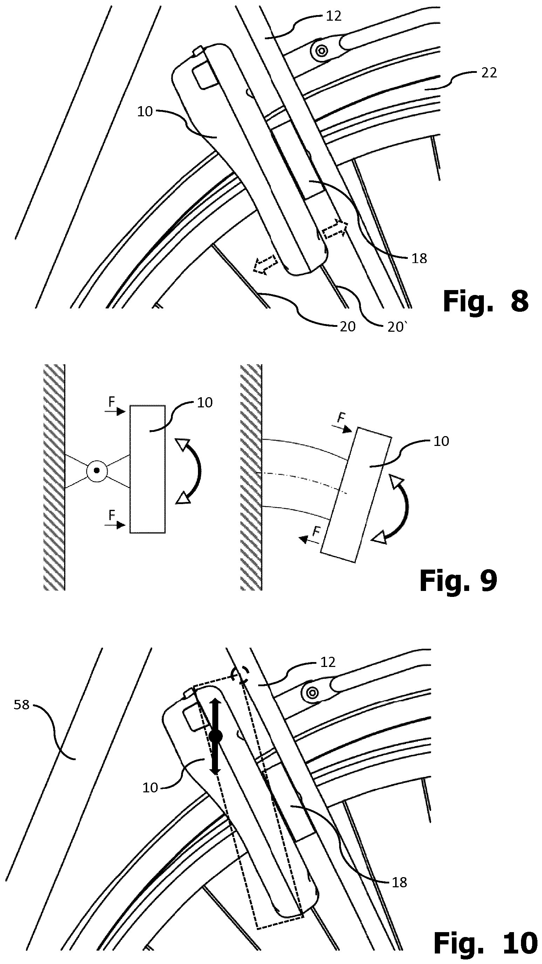

Figur 10 illustriert wieso es sinnvoll ist, die Kippbewegung auf einen ausgewählten Winkelbereich zu beschränken. Eine Kipp- und Ausweichbewegung um einen zu großen Winkel bzw. ein zu leicht bewegliches Material führt dazu, dass das Rahmenschloss gegen das Sitzrohr 58 einerseits oder gegen die Sattelrohrstrebe 12 andererseits stoßen kann. Das ist unerwünscht.

Der Silentblock 46 ermöglicht es auf einfache Weise das Lager zwischen dem Rahmenschloss 10 und dem Rahmen einzubauen. Die Silentblocks 46 werden zunächst mit dem Gewindestift 48 in die Aufnahmen im Rahmen eingeschraubt. Dann werden die Schrauben 42 und 44 durch die Langlöcher 30 im Rahmenschloss gesteckt und in die Gewindebohrung 50 eingeschraubt.

Zur sicheren Befestigung werden im vorliegenden Ausführungsbeispiel zwei Silentblocks 46 verwendet. Es ist aber durchaus denkbar, auch andere Konstellationen zur beweglichen Lagerung des Rahmenschlosses 10 zu wählen. In den Figuren 13 bis 17 sind verschiedene Elemente zur beweglichen Lagerung des Rahmenschlosses gezeigt, deren Verwendung je nach Herstellungskosten, Langlebigkeit auch bei wechselnden Witterungsbedingungen, Materialkosten und der Möglichkeit zur Auswahl der Steifigkeit in Betracht gezogen werden kann. Neben den Materialeigenschaften haben natürlich auch die Abmessungen einen Einfluss auf den gewünschten und erforderlichen Winkelbereich für eine Ausweichbewegung.

Figur 13 zeigt ein Bauteil in Form einer Metall-Ersatz-Feder, das durch Umformen hergestellt wurde. Die Feder 70 hat zwei parallele Flächen 72 mit einer Durchgangsbohrung 74. Durch diese Durchgangsbohrung 74 können die Schrauben 42 und 44 geführt werden.

Figur 14 zeigt ein Bauteil 80, mit einem im Querschnitt H-förmigen Kern 82 aus einem harten Kunststoff oder anderen harten Material und einer Füllung 84 des verbleibenden, ringförmigen Bereichs aus einem weicheren Material. Die Anordnung ist insgesamt zylindrisch. Gewindebohrungen 86 sind in die beiden Endflächen eingelassen.

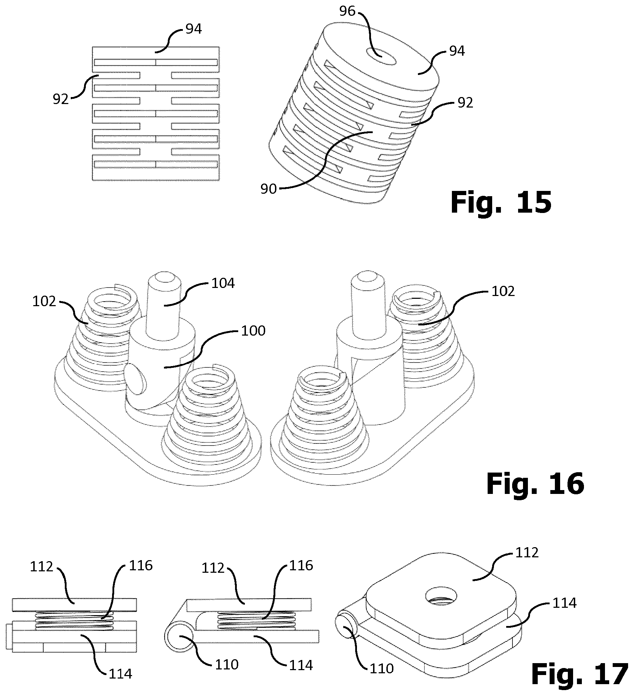

Figur 15 zeigt ein mehrfach geschlitztes Bauteil 90, beispielsweise aus Metall. Auch dieses Bauteil ist zylindrisch. Schlitze 92 erstrecken sich in Umfangsrichtung übereinander und teilweise versetzt. In den Endflächen 94 sind Gewindebohrungen 96 vorgesehen.

Figur 16 zeigt ein Gelenk 100 welches gemeinsam mit einer konischen Doppelfeder 102 auf einer Befestigungsplatte 104 vorgesehen ist. An dem Gelenk ist ein Gewindestift 104 vorgesehen.

Figur 17 illustriert die Verwendung eines federbeaufschlagten Scharniers 110. Das Scharnier 110 verbindet zwei Platten 112 und 114. Eine zwischen den Platten 112 und 114 angeordnete Feder 116 bewirkt eine Rückstellkraft.

Alle in Figur 13 bis 17 gezeigten Komponenten sind zur beweglichen Lagerung eines Rahmenschlosses gut geeignet. Die Kosten eines Silentblocks sind jedoch besonders gering.

In Figur 18 ist zu erkennen, dass der Schließbügel am Speichen-seitigen Ende 60 konisch verjüngt, also angespitzt ist. Dadurch erfolgt die Ausweichbewegung nicht abrupt, sondern nach Maßgabe des Verjüngungswinkels mit einem fließenden Übergang. Alternative Ausführungen des Bügelendes haben eine Keilform 62, Pyramidenform 64, Kegelform 66 oder Rundform 68.

Figur 21 zeigt den Silentblock 46, welcher durch eine Schutzummantelung 45 vor äußeren Umwelteinflüssen, wie Sonnenlicht und Feuchtigkeit geschützt wird. Die Ummantelung kann beispielsweise durch einen dünnwandigen Schlauch oder eine Beschichtung erfolgen. Im Falle der verschleißbedingten Ermüdung oder Zerstörung der Lagerverbindung verhindert eine Sicherheitsabfangvorrichtung 49 das Lösen des verbundenen Rahmenschlosses 10 von den Sattelrohrstreben 12 des Fahrradrahmens.

Wenn der Schließbügel 16 sich in der Verriegelungsstellung zwischen den Radspeichen befindet wird die Drehung des Rades verhindert.

Das vorliegende Ausführungsbeispiel verwendet ein vollautomatisches Rahmenschloss 10. Dabei ist ein mobiles Endgerät vorgesehen, welches auf dem Bildschirm mit Hilfe einer Software ein Bedienmenü für das Rahmenschloss 10 darstellt. Die dargestellten Symbole führen bei der Auswahl jeweils in ein Untermenü mit entsprechenden Optionen. Hier können Batterieladezustand, Verbindungsstatus, Nutzerkennung, Identifikationsnummer des Rahmenschlosses, Störungsmeldungen und weitere statistische und funktionelle Daten angezeigt werden und Einstellungen vorgenommen werden. Mit einem digitalen Schieberegler lässt sich das Rahmenschloss 10 per Funkbefehl ausnahmsweise auch manuell öffnen bzw. verriegeln. Ein mobiles Endgerät kann ein Smartphone, Tablet oder ein ähnliches Gerät sein.

Ein Schieberegler ermöglicht die Aktivierung bzw. Deaktivierung, sowie die Wahl des Abstandes einer abstandsabhängigen Öffnungsfunktion des Rahmenschlosses 10 und ein weiterer Schieberegler die Aktivierung bzw. Deaktivierung, sowie die Wahl des Abstandes der abstandsabhängigen Verriegelungsfunktion des Rahmenschlosses 10. Statt eines mobilen Endgerätes kann aber auch ein Transponder verwendet werden. Ein Taster am Transponder ermöglicht durch Tastendruck das Rahmenschloss durch ein Funksignal auch manuell zu öffnen oder zu verriegeln. Dabei hat es sich als vorteilhaft erwiesen, wenn der Taster eher klein und etwas versenkt im Gehäuse des Transponders angeordnet ist. Dadurch wird ein unbeabsichtigtes Betätigen vermieden, wenn der Transponder in einer engen Tasche o.ä. transportiert wird. Eine Leuchtdiode ermöglicht dem Nutzer Betriebszustände zu erkennen, wie zum Beispiel einen kritischen Batteriezustand, einen Diebstahlalarm und weitere Funktionsmeldungen. Ein Batteriefach ermöglicht den Austausch der innen liegenden Batteriezelle.

Das Rahmenschloss 10 kann mit einer Aufnahmeöffnung ausgestattet sein, welche einen Bolzen aufnimmt und verriegelt. Der Bolzen ist beispielsweise fest mit einem Stahlkabel verbunden und verfügt über einen umlaufende Nut. In der Verrieglungsstellung des Schließbügels wird der zuvor in die Aufnahmeöffnung eingesteckte Bolzen gesperrt.

### Die beschriebene Anordnung arbeitet wie folgt:

In einer Ausgangssituation befindet sich der Schließbügel 16 des Rahmenschlosses 10 in der Verriegelungsstellung. Das Hinterrad des Fahrrads ist durch den Schließbügel 16 blockiert und ein Fahren des Rades ist nicht möglich.

Die bidirektionale Funkeinheit des Rahmenschlosses sendet in periodischen Abständen ein Identifizierungssignal aus. Die portable bidirektionale Funkeinheit trägt der Fahrradbesitzer (z.B. in einer Hosentasche, an einem Schlüsselbund, in einem Rucksack, etc.) mit sich. Der Fahrradbesitzer befindet sich außerhalb der Funkreichweite des Rahmenschlosses.

Die portable Funkeinheit sucht in periodischen Abständen nach dem Identifizierungssignal der Funkeinheit. Bewegt sich der Fahrradbesitzer mit der portablen Funkeinheit in die Reichweite der Funkeinheit wird anhand des Identifizierungssignales eine verschlüsselte Funkverbindung zueinander aufgebaut. Ist die Funkverbindung etabliert, beginnt mittels eines Messverfahrens die Ermittlung des Abstandes zwischen den Funkeinheiten und dem Rahmenschloss. Als Messgröße dient die Empfangsfeldstärke des eingehenden Funksignals. Dieser Wert wird durch das Generic Attribute Profile (GATT) des Bluetooth Low Energy Standards zur Verfügung gestellt. Der Indikator für die Empfangsfeldstärke wird als RSSI (Received Signal Strength Indicator) Wert bezeichnet. Je höher die gemessene Feldstärke ist, desto geringer ist der Abstand zwischen der Funkeinheit und dem Rahmenschloss. Solange die Feldstärke einen festgelegten Wert nicht überschreitet, verbleibt das Rahmenschloss in der Verriegelungsstellung.

Unterschreitet der Fahrradbesitzer einen festgesetzten Abstand zu dem Fahrrad steigt die Signalstärke über den voreingestellten Wert. Ist der Schwellwert überschritten, wird eine unmittelbare Näherung des Nutzers erkannt und der Öffnungsvorgang eingeleitet. Der Abstand innerhalb dessen eine Öffnung bzw. Verriegelung erfolgt kann im Bereich zwischen 50 Zentimetern und 30 Metern liegen und von dem Nutzer nach Bedarf konfiguriert werden. Der Nutzer ist also beim Verriegelungsvorgang nicht unbedingt in der Nähe des Fahrrads und kann den Erfolg überwachen.

Die zentrale Steuereinheit wertet die Ergebnisse der Feldstärkemessung aus und steuert in Abhängigkeit den Öffnungsvorgang. Die abstandsabhängige Steuerung des Öffnungs- bzw. Verriegelungsvorganges des Rahmenschlosses kann durch ein mobiles Endgerät oder den mobilen Transponder als auch am Rahmenschloss 10 selbst manuell ausgeführt werden. Dabei verfügen das mobile Endgerät, der mobile Transponder und das Rahmenschloss über entsprechende Bedienelemente in Form vom Sensortasten oder Tastern.

Zum Öffnen wandelt die Verzahnung 34 auf dem Schließbügel 16 mit Hilfe der Antriebsschnecke 28 die Motorbewegung in eine Rotation des Schließbügels 16 um. Der Schließbügel 16 wird bis in seine Endlage bewegt.

Eine Endlagenerkennung signalisiert der zentralen Steuereinheit das Erreichen der Öffnungsstellung. Wird das Fahrrad benutzt, erkennt die Detektionseinheit für die Radrotation den Fahrbetrieb und die zentrale Steuereinheit sperrt einen Verrieglungsvorgang. Zusätzlich werden durch den Neigungs- und Beschleunigungsgeber die Bewegungen im Fahrbetrieb bzw. im Stillstand gemessen und von der zentralen Steuereinheit ausgewertet.

So lange die Auswertungen der Signale einen Fahrbetrieb erkennen lassen, wird kein Verriegelungsvorgang gestartet. Wird ein Stillstand des Fahrrads erkannt, werden wiederum die Funkeinheit zur Ermittlung des Abstandes zwischen dem Fahrradbesitzer und dem Fahrrad genutzt. Dabei wird wie zuvor beschrieben zur Ermittlung des Abstandes eine Messung der Feldstärke des Funksignales vorgenommen. Überschreitet der Fahrradbesitzer mit der portablen Funkeinheit den eingestellten Abstand zum Fahrrad, wird der Verriegelungsvorgang ausgelöst. Der Fahrradbesitzer braucht nicht tätig werden. Es muss weder am mobilen Endgerät, noch am vollautomatischen Rahmenschloss eine Betätigung erfolgen. Die zentrale Steuereinheit hebt die Sperrung des Schließbügels 16 auf und steuert die Bewegung des Schließbügels 16 in die Verriegelungsstellung. Damit hat das Rahmenschloss 10 die Ausgangsstellung wieder eingenommen.

Wenn der Schließbügel 16 auf eine Speiche trifft, wird eine Ausweichbewegung ausgeführt, bei der das Rahmenschloss 10 in der oben beschriebenen Weise verkippt und/oder lateral verschoben wird. Das Rahmenschloss verriegelt also auch in diesem Fall. So lange sich das Rahmenschloss 10 in der Verriegelungsstellung befindet, werden die Signale eines Neigungs- und Beschleunigungsgebers von der zentralen Steuereinheit ausgewertet. Überschreiten die gemessenen Werte einen festgelegten Schwellwert, wird mittels des Signalgebers beispielsweise ein akustischer Diebstahlalarm ausgelöst. Ebenso kann die mobile Funkeinheit bei einem Diebstahlversuch eine akustische oder haptische Meldung an den Fahrradbesitzer ausgeben. Damit kann ein Manipulationsversuch am Fahrrad oder das Wegtragen des Fahrrads zuverlässig erkannt werden.

Die vorstehenden Anordnungen wurden detailliert beschrieben. Es versteht sich aber, dass dies nicht limitierend für den Schutzumfang des Patents sein soll, der ausschließlich durch die Patentansprüche bestimmt wird.

## Patentansprüche

1. Rahmenschloss (10) mit Mitteln zur Befestigung am Rahmen (12) eines Fahrrads oder eines anderen von einer Person angetriebenen Fahrzeugs, wobei das Rahmenschloss von einem geöffneten in einen sperrenden Zustand zuschließbar ist, bei welchem sich ein Bügel (16) oder eine andere Blockiervorrichtung des befestigten Rahmenschlosses (10) in dem Bereich zwischen die Speichen (20) eines Fahrzeugrads (22) befindet, wobei die Mittel zur Befestigung des Rahmenschlosses (10) am Rahmen des Fahrzeugs ein bewegliches Lager (18) umfassen, welches eine Ausweichbewegung des Rahmenschlosses (10) erlaubt, wenn die Blockiervorrichtung (16) während des Schließvorgangs auf eine Speiche (20) trifft, mit einer Steuereinheit und einem von der Steuereinheit gesteuerten Motor (32) zum Zuschließen des Rahmenschlosses,
**dadurch gekennzeichnet, dass** die Blockiervorrichtung von einem Bügel (16) gebildet ist, der eine Verzahnung (34) aufweist, in welchen ein von dem Motor (32) angetriebenes Zahnrad eingreift, wobei der Bügel (16) mit einem Metallkern (36) ausgeführt ist, auf welchen die Verzahnung (34) aus Kunststoff aufgespritzt, aufgeschrumpft oder auf andere Weise aufgebracht ist.

2. Rahmenschloss nach Anspruch 1, **dadurch gekennzeichnet, dass**
(a) die Steuereinheit einen Empfänger für drahtlos übertragene Signale eines zugehörigen, mobilen Senders aufweist, und
(b) die Steuereinheit nach Maßgabe der von dem mobilen Sender empfangenen Signale oder Signalstärken das Rahmenschloss zuschließt.

3. Rahmenschloss nach einem der vorgehenden Ansprüche, **dadurch gekennzeichnet, dass** die Blockiervorrichtung am Speichen-seitigen Ende (60) angeschrägt, abgerundet, zugespitzt oder auf andere Weise zum Ende hin verjüngt ist.

4. Rahmenschloss nach einem der vorgehenden Ansprüche, **dadurch gekennzeichnet, dass** das Lager (18) Gummi oder ein anderes elastisches Material (56) umfasst, über welches die Verbindung zwischen Rahmen (12) und Rahmenschloss (10) hergestellt wird.

5. Rahmenschloss nach einem der vorgehenden Ansprüche, **dadurch gekennzeichnet, dass** das Lager (18) nur in einem begrenzten Winkelbereich beweglich ist.

6. Rahmenschloss nach einem der vorgehenden Ansprüche, **gekennzeichnet durch** eine Ummantelung (45) des beweglichen Lagers (18), welches vor Umwelteinflüssen schützt.

7. Rahmenschloss nach einem der vorgehenden Ansprüche, **gekennzeichnet durch** eine Fangvorrichtung (49), mit welcher ein sich vom Fahrradrahmen lösendes Rahmenschloss auffangbar ist.

## Claims

1. Frame lock (10) with means for attachment to the frame (12) of a bicycle or another vehicle driven by humans, wherein the frame lock is adapted to switch from a an open to a locking state, wherein a bracket (16) or another blocking device of the attached frame lock (10) is in the range between the spokes (20) of a vehicle wheel (22), wherein the means for attachment of the frame lock (10) to the frame of the vehicle comprise a moveable bearing (18) which enables an evasion movement of the frame lock (10) if the blocking device (16) hits a spoke (20) during the locking procedure, with a control unit and a motor controlled by the control unit for locking the frame lock, **characterized in that** the blocking device is formed by a bracket (16) which is provided with a toothing (34) engaging in a gear wheel (34) driven by the motor, wherein the bracket (16) is designed with a metal core onto which the toothing (34) in the form of plastic is sprayed on, shrinked on or otherwise deposited.

2. Frame lock (10) according to claim 1, **characterized in that**
(a) the control unit is provided with a receiver for wireless transmitted signals of a corresponding mobile sender, and
(b) die control unit locks the frame lock depending on the signals or signal strengths received by the mobile sender.

3. Frame lock according to any of the preceding claims, **characterized in that** the spoke-side end (60) of the blocking device is tapered, rounded, pointed or in another way designed with a decreasing diameter.

4. Frame lock according to any of the preceding claims, **characterized in that** the bearing (18) comprises rubber or another elastic material (56) which establishes the connection between the frame (12) and the frame lock (10).

5. Frame lock according to any of the preceding claims, **characterized in that** the bearing (18) is moveable only over a limited angular range.

6. Frame lock according to any of the preceding claims, **characterized by** a jacket (45) of the moveable bearing (18), which protects of environmental influences.

7. Frame lock according to any of the preceding claims, **characterized by** a catching device (49), which is configured to catch a frame lock released from the bicycle frame.

## Revendications

1. Antivol de cadre (10) muni de moyens destinés à le fixer au cadre (12) d'une bicyclette ou de tout autre véhicule manoeuvré par une personne, l'antivol de cadre pouvant être fermé en passant d'un état d'ouverture à un état de blocage dans lequel un arceau (16) ou tout autre dispositif de blocage de l'antivol de cadre (10) fixé se trouve dans la zone située entre les rayons (20) d'une roue de bicyclette (22), les moyens de fixation de l'antivol de cadre (10) comprenant sur le cadre de la bicyclette un palier (18) mobile permettant un dégagement de l'antivol de cadre (10) lorsque le dispositif de blocage (16) heurte un rayon (20) pendant la fermeture, muni d'une unité de commande et d'un moteur (32) commandé par l'unité de commande et destiné à fermer l'antivol de cadre,
**caractérisé en ce que** le dispositif de blocage est formé d'un arceau (16) qui présente une denture (34) dans laquelle vient mordre une roue dentée actionnée par le moteur (32), l'arceau (16) étant réalisé avec un noyau métallique (36) sur lequel la denture (34) en matière synthétique est projetée, emmanchée ou appliquée de toute autre manière.

2. Antivol de cadre selon la revendication 1, **caractérisé en ce que**
(a) l'unité de commande présente un récepteur de signaux transmis sans fil d'un émetteur mobile associé, et
(b) l'unité de commande ferme l'antivol de cadre en fonction des signaux ou des intensités de signaux reçus par l'émetteur mobile.

3. Antivol de cadre selon l'une quelconque des revendications précédentes, **caractérisé en ce que** le dispositif de blocage est taillé en biseau, est arrondi, est taillé en pointe ou se rétrécit vers son extrémité d'une toute autre manière à l'extrémité (60) située côté rayons.

4. Antivol de cadre selon l'une quelconque des revendications précédentes, **caractérisé en ce que** le palier (18) comprend de la gomme ou tout autre matériau élastique (56) qui permet d'établir la connexion entre le cadre (12) et l'antivol de cadre (10).

5. Antivol de cadre selon l'une quelconque des revendications précédentes, **caractérisé en ce que** le palier (18) est mobile uniquement dans une zone angulaire restreinte.

6. Antivol de cadre selon l'une quelconque des revendications précédentes, **caractérisé par** une gaine (45) du palier mobile (18) qui le protège des effets de l'environnement.

7. Antivol de cadre selon l'une quelconque des revendications précédentes, **caractérisé par** un dispositif de retenue (49) grâce auquel un antivol de cadre se détachant du cadre de bicyclette peut être retenu.
